Europäisches Patentamt

European Patent Office

Office européen des brevets

(11) Publication number: **0 192 354 B1**

# (12) EUROPEAN PATENT SPECIFICATION

(45) Date of publication of patent specification: **18.03.92** (51) Int. Cl.⁵: **A23L 3/10, A23L 3/34**

(21) Application number: **86300542.7**

(22) Date of filing: **28.01.86**

(54) Method for thermally processing plastic food containers.

(30) Priority: **28.01.85 US 695534**
**24.06.85 US 748168**

(43) Date of publication of application:
**27.08.86 Bulletin 86/35**

(45) Publication of the grant of the patent:
**18.03.92 Bulletin 92/12**

(84) Designated Contracting States:
**AT BE CH DE FR GB IT LI LU NL SE**

(56) References cited:
**GB-A- 2 036 533**
**US-A- 4 262 027**

**PATENT ABSTRACTS OF JAPAN, vol. 8, no.
193 (C-241)[1630], 5th September 1984; & JP-
A-59 88 053 (SHIYUNYOUDOU K.K.)
21-05-1984**

**PATENT ABSTRACTS OF JAPAN, vol. 8, no.
138 (C-231)[1575], 27th June 1984; & JP-A-59
48 055 (NIHON YOURIYOKUSO K.K.)
19-03-1984**

**FSTA, 71-08-F0567, 71039016; O.
PASOUARELLI: "New polyolefin packaging
material with cellular structure", & IMBAL-**

**LAGGIO, vol. 22, no. 179, pages 27-30, 1971**

(73) Proprietor: **AMERICAN NATIONAL CAN COM-
PANY
8770 West Bryn Mawr Avenue
Chicago, Illinois 60631(US)**

(72) Inventor: **Kaercher, Ralph W.
465 North Hill Drive
Barrington Illinois 60010(US)**

(74) Representative: **Hutchins, Michael Richard et
al
Graham Watt & Co. London Road Riverhead
Sevenoaks, Kent TN13 2BN(GB)**

## Description

This invention relates to the thermal processing of foodstuffs in self supporting plastic containers. More particuly, the invention is directed to methods the consequences of which lead to substantially reduced distortion of plastic containers during thermal processing such that the resulting containers have an acceptable configuration.

It is well known in the food packaging industry that foodstuffs are filled into metal or glass containers which are hermetically sealed and then thermally processed to sterilize the food to render it safe for human consumption. "Thermal processing" herein means subjecting the foodstuff in the container to a time-temperature parameter which results in a "commercially sterilized" food, as defined in U.S. Title 21 CFR Part 113 (Definitions, Section 11.3). "Commercial Sterility" of thermally processed food means the condition achieved --

"(i) By the application of heat which renders the food free of --
(a) Microorganisms capable of reproducing in the food under normal nonrefrigerated conditions of storage and distribution; and
(b) Viable microorganisms (including spores) of public health significance; or
(ii) By the control of water activity and the application of heat, which render the food free of microorganisms capable of reproducing in the food under normal nonrefrigerated conditions of storage and distribution."

Conventionally, thermal processing of foodstuffs in metal containers is carried out at temperatures ranging from about 190°F to about 280°F (88 - 138°C) for from about several minutes to over six hours in various equipment such as rotary continuous cookers, still retorts and the like, and the containers are subjected to one of these cook-cool cycles before they are discharged, stacked and packed for shipment and distribution. The highest processing temperatures are usually applied to low acid foods which provide better media for growth of microorganisms than do acid foods. Acid foods require less heat because some microorganisms are quite sensitive to acids. The preserving effect of acids is due to their hydrogen ion concentration and destabilization effect on bacterial cells. Acids may be found in foods as a natural component, produced in foods by fermentation, or added to foods directly as a chemical. Since acid enhances the lethality of heat, acid foods (pH 4.6 or below) need only be heated generally up to about 205°F (96°C) which is much lower than the heat needed for foods of higher pH to render them free of spoilage organisms. Thus, there are certain foods, particularly low-acid vegetables (some of which are hereinafter enumerated) which require thermal processing at a relatively high temperature for a long period of time (high time-temperature processing parameter) in order to kill microorganisms responsible for food spoilage and toxicity.

Much effort has been expended to packaging foods in plastic containers as a substitute for metal and glass containers. Plastic containers are desirable because they provide advantages of low cost, light weight, lack of rust and corrosion problems, and ease of disposability. Metal and glass containers commonly used for packaging and preserving foodstuffs have no difficulty in withstanding thermal processing temperatures which are higher than about 190°F (88°C), and importantly they can easily withstand the highest thermal processing or retorting temperatures used commercially (currently around 275°F to 280°F)(135 to 138°C) without permanent distortion or loss of hermetic seals. Rigid plastic containers however, for example those made of olefinic structural material such as polyethylene, polypropylene or blends thereof, soften increasingly as the elevated thermal processing temperature increases and as the materials approach their respective melting points. For a typical high density polyethylene the melting point is about 275°F (135°C), and for a homopolymer of polypropylene it is about 330°F (166°C). While softened, the plastic distends and tends to distort due to relative internal/external pressures and handling. In conventional thermal processing of plastic containers, unless various thermal processing factors are very closely controlled, the container, upon cooling, will be permanently distorted and therefore have an unacceptable configuration. One reason that the softened plastic at the elevated thermal processing temperature distorts is that the pressure within the container during thermal processing exceeds the external pressure, i.e. the pressure in the equipment in which the process is carried out. The internal pressure against the plastic wall causes the wall to distend outwardly. Factors which contribute to increasing the internal pressure within the container are that the small amount of air or other gases usually present in the hermetically sealed container head space (above the food level in the container) undergo significant increases in volume and pressure at the elevated temperatures. Additionally, internal pressures also develop due to thermal expansion of the product, increased vapor pressures of the products, the dissolved gases present within the foodstuff contents and the gases generated by chemical reactions in the product during its cooking cycle. Thus, the total internal pressure within the container during thermal processing is the sum total of all of the aforementioned pressures. When this pressure exceeds the external pressure, the container distorts outwardly, thereby tending to expand the gases in the head space and thereby reducing the pressure differential relative to the external pressure. Usually, attempts are made to assure that the external pressure always exceeds the internal pressure such as by processing the filled container in a water medium with an over-pressure of air sufficient to compensate for the internal pressure. This is one of the means used to process foods packed in well-known flexible film packages such as the retort pouch. Also, external pressure in a steam retort can be increased by adding air to the steam. However, this reduces heating efficiency of the steam and can alter heat transfer within the retort. When the container is cooled, pressure within the container decreases relative to the external pressure and consequently the side wall and/or the bottom wall of the plastic container distends inwardly to compensate for the reduction in pressure. Cooling also tends to rigidify the plastic. This can cause the container to be permanently distended outwardly and/or inwardly.

It is well recognized that major problems in developing rigid thermally processable plastic containers and in developing methods for thermally processing foodstuffs in such containers have been distortion and leakage of the plastic containers during processing and the complexity and criticality involved in controlling the filling of the containers, the amount of headspace, relative internal and external pressures, cooling rates, handling and other factors which affect distortion and strength of the container walls and whether or not the distorted walls become permanently deformed in unacceptable configurations. Such deformations can be side wall bulging, side wall panelling (buckling of the side wall inwardly), and/or outward distortion of the container bottom wall referred to as "bulging" or "rocker bottom". These deformations and distortions may be unsightly, may interfere with proper stacking of the containers during shipment, and may cause them to rock and be unstable when placed on flat surfaces. Any such deformation may be perceived as a possible indication of spoilage of the food contents, thus resulting in rejection of the container by the consumer. Unless these distortions and deformities and related problems are eliminated or substantially reduced, it will be difficult to develop and provide low-cost, universally satisfactory commercially thermally processable rigid plastic containers for foodstuffs as viable commercial alternatives to thermally processable metal and glass containers.

A problem associated with controlling the headspace within a narrow range to limit or control internal gas and pressure formation to within acceptable levels is that foodstuff filling equipment does not always fill the container with precisely the same amount of food, all plastic containers are not always exactly of the same dimensions and capacity, and there may be spillage. Because of these factors, the headspace above a foodstuff in a plastic container can vary during a run, and can be difficult to control within a narrow range. The narrowness and criticality of allowable headspace range has been a particular problem which has contributed to the overall complexity of the thermal processing of plastic containers, and has made commercial thermal processing of plastic containers difficult.

A problem associated with the high temperatures of conventional thermal processing is that at the higher retorting temperatures the plastic is softer and weaker, and the plastic is more easily stressed. One result is that the container at those temperatures tends not to have sufficient crush resistance to withstand many containers being stacked thereon during still retorting. For example, in a test simulating 14 layers of cans, the bottommost layer was evaluated. The cans were subjected to a still cook at 250° F for 65 minutes. All 16 cans of the bottom layer were severely crushed and were deemed to be unacceptable for commercial use. In a second test at 245° F for 75 minutes, all cans exhibited slight crushing. In a third test, at 240° F for 90 minutes, all 16 cans were examined and none exhibited crushing. Thus, the lower the still retort temperature, the greater the crush resistance of the containers on the bottom row and the greater is their ability to withstand the weight of containers stacked over them. Another result is that those containers whose walls are not manufactured to have good uniform material distribution or have thin or weak spots, will, due to the internal pressures, be first and/or excessively stressed and distended in those areas, relative to other more uniformly thick areas. Thus, plastic containers intended for thermally processing foods at the higher temperatures require a greater degree of uniformity in material distribution than containers intended to be processed at the lower temperatures.

Still another problem involved in thermal processing of plastic containers, rigid or flexible, is that the hermetic seals may rupture. At high enough temperatures, if the previously rigid body hook softens enough, it may unfold from the double seam and cause the metal end to blow off. Hermetic seals formed by use of heat sealing adhesives made of lower melting polymers, may also rupture under the influence of internal and external forces developed at the elevated thermal processing temperatures, e.g. above 240° F.

Although it is recognized that it may be possible to make plastic containers from highly rigid resins with sufficient thickness in the side and bottom walls, and/or to use higher melting polymers and adhesives to better withstand the temperatures and pressures developed during thermal processing, practical considerations such as costs associated with the greater amounts of these resins, the increased weight, the decreased thermal conductivity, increased plastic container manufacturing time (heating, cooling, etc.), and other factors militate against use of this approach.

Another approach to thermally processing foodstuffs in plastic containers is to maintain the thermal processing temperature at a level low enough that the polymers do not soften significantly. However, this approach requires significantly longer processing times to achieve the same level of commercial sterility of the foodstuff. The extended times produce no relative energy cost savings, increased time reduces throughput in the equipment and often, particularly with respect to low acid foodstuffs, they will result in the foodstuff being of poorer quality in terms of its texture, color and flavor. The extended thermal process tends to overcook the foodstuff compared to the quality of the same foodstuffs processed at higher temperatures for shorter times.

In view of the aforementioned problems, it would be desirable and it is an object of this invention to provide methods of thermally processing foodstuffs in plastic containers, both rigid and flexible, which would overcome or substantially reduce these problems wholly or in part.

Accordingly, this invention seeks to facilitate the thermal processing of plastic food containers packed with foodstuff so as to yield processed plastic containers which have acceptable configurations.

This invention seeks to reduce the temperature needed to thermally process foodstuffs in plastic containers to thereby alleviate the problems associated with softening of plastic at the usual, more elevated thermal processing temperatures, so as to reduce the problems of plastic container wall distortion and of the permanently deformed configurations associated therewith.

We have striven by this invention to reduce the thermal processing time/temperature parameters, especially the temperature, as well as the energy utilized as well as to maintain throughput in thermal processing of plastic containers packed with foodstuffs.

An advantage of the lower thermal processing temperatures and parameters possible according to this invention is that they enable the use of thinner plastic containers, and permit the foodstuff thermally processed in a plastic container to have at least the same quality as that provided in a metal or glass container along with the advantages attendant in having containers made of plastic rather than metal or glass.

This invention can facilitate the thermal processing of foodstuffs in plastic containers by increasing the headspace range with respect to which and within which a foodstuff can be successfully and easily filled and thermally processed in a plastic container.

Thanks to the invention, the thermal process and the reformation of distorted plastic container walls are less complicated and less critical.

Better plastic container performance and strength during thermal processing can be attained by effecting the process at lower temperatures, yielding processed plastic containers having commercially acceptable, aesthetic, physical and performance characteristics.

It is an aim of this invention to provide a method of thermally processing foodstuffs in self-supporting plastic containers at lower temperatures than without an acidulant, whereby the acidulated foodstuff has one or more improved organoleptic qualities, such that the total organoleptic effect is as pleasing or more pleasing than it would be if the same product were processed at higher parameters without an acidulant.

The invention meets its objectives for example by using as the acidulant a mixture of an aldonic acid and its lactones, whereby the acid lowers the pH to 4.6 or below, and the amount and type of acid employed are such that it does not impart an objectionable acid taste such as the strong, sharp, pungent, sour, or "pickled" flavor associated with acids commonly used in foods.

According to the present invention there is provided a method of thermally processing a self-supporting plastic food container having a heat sensitive foodstuff therein, eg. an acid or low acid foodstuff, which method is as defined in claim 1 below. References to a plastic food container below refer a self supporting plastic food container. The invention provides a method for substantially reducing the time and/or temperature to which a self-supporting plastic container is subjected during thermal processing of a heat sensitive foodstuff hermetically sealed therein, said foodstuff eg. being an acid or a low acid foodstuff, which comprises combining the foodstuff with an acidulant (ie. an hydrolysis mixture of an aldonic acid and its lactones or a precursor thereof) an amount sufficient to reduce its equilibrium pH to 4.6 or below, hermetically sealing the container with the acidulated foodstuff therein, and thermally processing the container at a time and/or temperature which is reduced and which thereby reduces softening and distortion of the plastic container during the thermal process, relative to the time/temperature which would have been employed and the consequent increased softening and distortion of the plastic container which would have occurred if the food stuff were not so acidulated.

It can further be seen that the present invention, as defined in the claims below, provides a method for substantially reducing the softening and distortion of a self-supporting plastic container during thermal processing of a heat sensitive foodstuff hermetically sealed therein, said foodstuff eg. being an acid or a low acid foodstuff, which comprises combining the foodstuff with an acidulant (ie. an hydrolysis mixture of an aldonic acid and its lactones or a precursor thereof) in an amount sufficient to reduce its equilibrium pH to 4.6 or below, and thermally processing the foodstuff in the container at a time/temperature parameter substantially lower than possible if said equilibrium pH were above 4.6 during said thermal processing, said reduced time/temperature parameter being responsible for reducing the side and bottom wall distortion of said container.

Also, there is provided a method of thermally processing a heat sensitive foodstuff in a rigid plastic container with minimal plastic softening and distortion during thermal processing, said foodstuff eg. being an acid or a low acid foodstuff, which comprises:

filling the container with foodstuff and acidulant (i.e. an hydrolysis mixture of an aldonic acid and its lactones or a precursor thereof) in an amount to lower the equilibrium pH to 4.6 or less;

hermetically sealing the container and subjecting the sealed contents to a time/temperature parameter sufficient to commercially sterilize the contents;

the temperature of said parameter being lower than the higher temperature commercial sterilizing parameter needed when the acidulant is not present, the lowered temperature parameter being primarily responsible for the reduced softening and distortion compared to the higher parameter.

According to another aspect of the invention, there is provided a hermetically sealed self-supporting plastic container containing a heat sensitive foodstuff of commercial sterility and an acidulant (the acidulant being an hydrolysis mixture of an aldonic acid and its lactones or a precursor thereof) which imparts to the foodstuff an equilibrium pH below what it was prior to its having been combined with the acidulant, the foodstuff having an improved organoleptic quality as compared to the organoleptic quality which the commercially sterile foodstuff would have had, had it not been combined with the acidulant.

This invention provides advantages over conventional thermal processing of plastic containers in that the lower thermal processing temperatures permitted by the invention create less internal gas build-up and less internal pressure against the container walls. Therefore there is less stress and distention of the plastic wells and fewer chances of the container bursting, rupturing, leaking or permanently distending beyond the container material's elastic limit. Further, the lower temperatures greatly facilitate the thermal process and make it much easier to reform the container walls to an acceptable configuration. The allowable headspace range is broader and less critical, and the control of the relative internal/external pressures is less critical, there being less need, if any, for over pressure cooling. In terms of container performance during processing at the lower temperatures wherein the plastic is not as soft, the plastic and the container are stronger and can resist more stress. Thus, at the lower processing temperatures in a still retort, containers exhibit better resistance to crushing and more containers can be placed on top of one another thereby increasing the retort output. Also, container well uniform material distribution is not as critical. In terms of economy, the thermal processing apparatus can be simpler in that overpressure cooling apparatus may not be needed. Retorts not already equipped for overpressure cooling can now be utilized. Since the thermal processing and cooling times can be reduced, and since, for example, more containers can be still retorted due to increased stacking, there can be economies through the increased thermal processing output. Economies can also be obtained by using thinner well constructions or less expensive, weaker structural materials.

With respect to improvements in terms of the foodstuffs processable in plastic containers, since less gas is evolved at the lower temperatures, it is easier to thermally process products which tend to evolve greater amounts of gas such as corn, dried beans, and dried bean products such as chile with beans which heretofore were more problematical in plastic containers at the higher temperatures. The lower thermal processing parameters of this invention permit the thermal processing in plastic containers of heat sensitive foodstuffs such as low acid heat sensitive vegetables which, due to the higher conventional thermal processing temperatures and/or longer times, tend to degrade in organoleptic qualities (texture, ie. firmness and compositional integrity, color, flavor, and aroma). Using the method of this invention, these vegetables are less overcooked , less flaccid and more firm, the color tends to be brighter, and the flavor improved, all relative to the same products processed at the higher temperatures for the same length of time or longer. Also, foodstuffs processed in plastic containers at the lower temperatures have organoleptic properties closer to the fresh or properly home-cooked product than the same products thermally processed at the higher time/temperature parameters. When the acidulants noted above are employed, masking of the fresh natural flavor of the foodstuff by an objectionable acid taste is minimised or eliminated.

Reducing the temperature to which plastic containers are subjected during thermal processing to low enough levels might permit the use of other thermoplastics which as structural materials, would soften and melt at lower temperatures than the blends used in Example 1 hereinafter. Such a material when employed with an oxygen barrier layer (such as ethylene vinyl alcohol copolymer, a vinylidene cholride copolymer, nylon or other layer which is a better oxygen barrier than the structural layers) may advantageously provide a potential for less expensive rigid plastic packages for thermally sterilized food products than currently available.

Reducing the thermal processing temperatures for multi-layer plastic containers having an inner moisture-sensitive oxygen barrier layer, such as made of an ethylene vinyl alcohol copolymer material, would reduce or eliminate the need for a drying agent to be incorporated in a layer of the structure to protect the barrier from moisture (see US Patent No. 4,407,897), since depending on the level of the lower processing temperature, there will be less or little permeation of moisture through the outer structural polyethylene or polypropylene layers to the barrier layer during retorting. With less or little permeation there is less of a need for a drying agent to absorb the permeated moisture.

The invention will be further explained in more detail in the following description.

In accordance with this invention, a method is provided for thermally processing plastic containers with heat sensitive foodstuff therein, at lower temperatures than heretofore conventionally practiced. More particularly. a method is provided for substantially reducing side and bottom wall distortion of a plastic container during thermal processing of a heat sensitive foodstuff hermetically sealed therein, which comprises combining the foodstuff with an acidulant (ie. an hydrolysis mixture of an aldonic acid and its lactones or a precursor thereof) in an amount sufficient to reduce the equilibrium pH of the foodstuff and contents to 4.6 or below, and thermally processing the foodstuff in the plastic container at a time/temperature parameter sufficient to achieve commercial sterilization of the foodstuff yet substantially lower than otherwise possible from a commercial sterility standpoint if said acidulant were not added and said equilibrium pH were above 4.6 during thermal processing. The lower temperature parameter substantially reduces the side and bottom wall distortion of the container during thermal processing, greatly facilitates the thermal process and cooling process and the control of their parameters and results in a thermally processed plastic container having an acceptable configuration.

Although the invention applies with respect to any heat sensitive foodstuff, the invention is especially applicable to low acid foodstuffs that normally require high processing temperatures to render them shelf stable and especially those low acid foodstuffs which are heat sensitive in the sense that they are susceptible to degradation in texture, color or flavor due to the more severe conventional thermal processing parameters and conditions. The acidulant is an hydrolysis mixture of a aldonic acid and its lactones or a precursor thereof, eg. a mixture of gluconic acid and glucono-delta lactone and glucono-gamma lactone, preferably provided to the foodstuff by combining the foodstuff with glucono-delta lactone (GDL), (which hydrolyzes and forms a mixture of gluconic acid and its aforementioned lactones) because it is effective in reducing the equilibrium pH of low acid foodstuffs to 4.6 or below without imparting a strong, sharp, pungent, pickled or acidic taste more commonly associated with other acidulants such as acetic, citric, lactic, malic, tartaric, and phosphoric acids which are commonly used in foods.

The description which follows is given by way of example with reference to the accompanying drawings, wherein like numerals are employed to designate like parts:

Figure 1A is a front elevational view partly in section, of an open-ended cylindrical plastic container before the container is packed with food and sealed according to this invention;

Figure 1B is a front elevational view partly in section, of the container shown in Figure 1A after the container has been filled with food and sealed under partial vacuum;

Figure 1C is a front elevational view partly in section, of the container shown in Figure 1B during thermal processing but before reforming, showing bulging of the container bottom wall;

Figure 1D is a front elevational view partly in section, of the container shown in Figure 1C illustrating rocker bottom after thermal processing;

Figure 1E is a front elevational view partly in section, of a container similar to figure 1D but wherein the container sidewalls are panelled;

Figure 1F is a cross-sectional view taken along line 1F-1F through the container shown in Figure 1E;

Figure 1G is a front elevational view partly in section, of the container shown in Figure 1A illustrating sidewall panelling and bottom bulging;

Figure 1H is a front elevational view partly in section, of the container shown in Figure 1A after thermal processing, according to the present invention and having a commercially acceptable configuration, and

Figures 2 to 7 each show representative parameter curves for thermally processing a different low acid foodstuff to commercial sterility, the curves to the right illustrating conventional parameters needed without an acidulant, the curves to the left illustrating parameters needed by using an acidulant, ie. the preferred GDL, in combination with a foodstuff in accordance with this invention, Figure 2 being for yellow squash, Figure 3 carrots, Figure 4 green beans, Figure 5 green peas, Figure 6 corn, and Figure 7 lasagna.

In accordance with this invention, the foodstuff to be thermally processed in the plastic container is combined with an acidulant (ie. as defined hereinabove), the amount of the acidulant being sufficient to reduce the equilibrium pH of the foodstuff contents to 4.6 or below in the plastic container prior to thermal processing. By equilibrium pH is meant the negative log of the hydrogen ion concentration of the blended product, taken in accordance with CFR 114.80(a)(1),(2) and CFR 114.90, but in any case taken not more than 24 hours after completion of the thermal process, ie. when the application of heat is terminated.

The foodstuffs which can be thermally processed in plastic containers in accordance with this invention can be any heat sensitive foodstuffs, regardless of the level of its acidity, ie. acid, acidified, or low acid. Thus, the invention is applicable to any heat sensitive acid foodstuff naturally or otherwise already having a pH 4.6 or below, the acidulant being added to increase the acidity even further to thereby enable the thermal process to be conducted at a still lower time/temperature parameter which has even less an effect on the plastic of the container. The invention is, however, more particularly directed to heat sensitive low acid foodstuffs having a pH above 4.6, Examples of low acid foodstuffs are seafood (including fish and shrimp), meats, meat products (including chili and beef stew), vegetables, cereal grains (e.g. rice) and cereal grain-based products (including fried rice, Spanish rice and other rice products and pastas (including lasagna, ravioli and spaghetti). Low acid foodstuffs often require severe thermal processing to achieve commercial sterility, that is, a high temperature, e.g. above 250°F (121°C) say to 280°F - 138°C) for a long time to kill microorganisms responsible for food spoilage and toxicity, and, for some products also to obtain sufficient tenderization. In general, commercial sterilization temperatures and times employed for commercial sterilization of low acid foodstuffs packed in metal containers has ranged from about 230°F to about 275°F (110 - 135°C), for about from 10 minutes to about 6 hours, the times and temperatures being selectable depending upon the type, amount, conductivity, thermal death time requirement, and initial temperature of the food product, the size of the container, type of sterilization process used, the type of and operating parameters of the equipment employed, as well as energy costs and the throughput desired. For those low acid foods (for example, peas and corn) which are not particularly heat-sensitive when packed in small to medium sized containers, e.g. (303x406 - 8.1 x 11.1 cm), (e.g. corn, in the sense that relatively speaking it can withstand more heat prior to degrading than many other vegetables), a high temperature, short cook, e.g. 275°F (135°C) for just enough time to achieve commercial sterility and tenderize the kernels, e.g. an agitated cook of about 10 minutes, is usually employed because it provides quick throughput and good flavor and texture. However, most low acid foodstuffs are usually processed at lower temperatures of from about 240°F to about 255°F (116 - 124°C) for from about 15 to 50 minutes. High temperature, long cooks can tend to cause the most heat-sensitive of the low acid products to degrade in quality as to texture, in terms of their losing their firmness (being overly softened) and losing their integrity, as to flavor by having an overcooked or carmelized taste, and as to color by being darkened as compared to the freshly harvested product. The heat-sensitive products also tend to lose some nutritional value.

Examples of naturally acid foodstuffs include tomatoes, tomato products, most fruits and berries.

Examples of low acid foodstuffs which might be considered heat sensitive for one reason or another include cereal grains, meats and meat products, beans (including lima, kidney, snap beans, e.g. blue lake, green and wax), and snap bean products (e.g. bean salads), dried bean products (including baked beans, chili), beets, certain seafoods (e.g. shrimp), yellow squash, zucchini, pumpkin (due to its poor conductivity in large containers, e.g. 603x700 (15.7 x 17.8 cm), it darkens due to the need for a long cook time for sterilization), carrots, asparagus, cauliflower, melons, eggplant, stir-fry Chinese vegetables, cabbage, pasta, celery, mushrooms, olives and onions, and food combinations including one or more of such vegetables. Of the above foodstuffs, squash, zucchini, melons, artichokes, cauliflower and celery are very heat sensitive.

Acidulants are added to foodstuffs to permit thermal processing of the plastic containers in which they are contained to be effected at lower processing temperatures because of the aforementioned effect of the acid on acid-sensitive microorganisms and its effect on destabilizing bacterial cells. The presence of the acid enhances the lethality of the heat with respect to such microorganisms and cells.

The acidulant is combined with the foodstuff in a conventional manner. If the acid is in solid form, such as granular, it may be sprinkled on the food or intimately mixed therewith. The most preferred procedure is to include the acid in an aqueous solution, called a brine, which is included with the food in the container. With respect to low acid foodstuffs, the amount of acid employed is that which is sufficient to reduce the equilibrium pH of the food contents to be thermally sterilized to 4.6 or below. The amount is in part dictated by the pH sought to be obtained and in part by the desired resulting taste of the thermally processed foodstuff. Too much acid would tend to provide the foodstuff with a strongly acidic taste. Typical acids added to the foodstuffs include acetic, citric, malic, etc. These acids create a distinct "pickled" flavor. In many instances, the taste of these acids deleteriously detracts from or masks the natural flavor of the product. Thus, pickled beets would have a superior color and texture compared to non-acidified canned beets, but they would not taste like fresh beets. In the process of the present invention, the acidulant to be combined with the foodstuff is a mixture of an aldonic acid and its lactones. The preferred aldonic acid is gluconic acid. It is a mild organic acid which has a mild acid taste.

The aldonic acids which can be combined with the foodstuff in accordance with this invention are prepared for example by oxidation of sugars or aldoses, preferably from those having six carbon atoms, although they could be prepared from those having five carbon atoms. Those acids prepared from sugars having six carbon atoms are talonic, galactonic, idonic, gulonic, mannonic, gluconic, altronic and allonic (although currently these acids, with the exception of gluconic, may be unavailable commercially). These acids are respectively derived from their aldoses -- talose, galactose, idose, gulose, mannose, glucose, altrose and allose. Sugars having five carbon atoms are lyxose, xylose, arabinose and ribose.

Any suitable method or material can be employed to bring the aldonic acid and its lactones into combination with the foodstuff. While the acid might be added by itself (since the acid, when in contact with moisture or water in the foodstuff, will be converted to a mixture of the acid and its lactones, doing so currently is probably not practical since, so far as we know, aldonic acids are not known to to be commercially available in crystalline form or in food grade. This is the case with the preferred gluconic acid. These acids may be commerically available in technical grade in aqueous solutions. For example, gluconic acid is so available in aqueous solutions stated to be about 50% (by weight) gluconic acid. These aqueous solutions of the acid are equilibrium mixtures of gluconic acid and its lactones, glucono-delta lactone and glucono-gamma lactone. Gluconic acid has a mild acid taste.

The preferred method for providing the hydrolysis mixture of the aldonic acid and its lactones to the foodstuff is to combine the foodstuff with a precursor of the aldonic acid. A precursor of the acid herein means a liquid, material or compound which adds the acid to, or forms or provides it in the foodstuff with which it is combined. Again, when the acid contacts moisture or water in or of the foodstuff, it will convert partially to and will co-exist with its lactones. Precursors of these acids which can be employed include their lactones themselves (which can be said to be latent acids since they hydrolyze in water to form a mixture of the acid and its lactones), mixtures of these lactones, and salts of the acids in combination with certain strong acids. For example, precursors of the preferred gluconic acid which can be employed include glucono-delta lactone, glucono-gamma lactone, mixtures of these lactones, and gluconate salts in combination with the strong acid, hydrochloric. By far, the most preferred precursor for this invention is glucono-delta lactone (GDL). When used in powdered form, the taste of the powder is initially sweet, and thereafter as it hydrolyses, the taste becomes mildly acidic. Of course, when GDL is employed in increasingly large amounts, the foodstuff would tend to taste increasingly acidic, although less acidic than with equivalent amounts of one of the aforementioned acids commonly used in foodstuffs. GDL is preferred because it results in significantly less detraction from or masking of the natural flavor and has less of an acid taste than acids commonly used in foods. Use of an acidulant such as GDL has an added advantage with respect to acid foods in the sense that it permits their thermal processing in plastic containers at time/temperature parameters even lower than otherwise possible within acceptable limits (from a commercial sterility viewpoint) without the addition of the GDL and with less of an effect on taste than most other acids would produce. GDL is commercially available in food grade as a free-flowing, odorless, white powder. Food grade solutions of GDL are also commercially available and can be employed. GDL is an inner ester of gluconic acid which when hydrolyzed forms gluconic acid. Hydrolysis occurs when GDL is combined with water, for example that of an (aqueous) brine or in the foodstuff. Hydrolysis of the glucono-delta lactone results in an equilibrium mixture of from about 55% to about 60% (by weight) gluconic acid and from about 45% to about 40% (by weight) of a mixture of glucono-delta lactone and glucono-gamma lactone. The rate of acid formation during hydrolysis is affected by the temperature, the pH value and concentration of the solution. Hydrolysis of delta lactones tends to be more rapid than hydrolysis of gamma lactones. In the absence of heat, hydrolysis tends to be slow. Heating the brine accelerates the hydrolysis reaction and is the preferred method. Heating the foodstuff also has the same effect. Like results would be expected to occur with the use of lactones of other aldonic acids, e.g. galactono-delta lactone. For this invention, rapid hydrolysis through heating is preferred to help acidify the particulate foodstuff rapidly and thoroughly.

Examples of those salts which can be used in combination with certain strong acids (each suitable for food use), include sodium, potassium and calcium salts, for example, sodium, potassium and calcium gluconates. An example of an acid considered herein to be "strong" is one which will react with the acid salt and provide enough available hydrogen ions to form the desired aldonic acid and its lactones in the foodstuff. Such an acid would be hydrochloric. Of course, the type, manner and/or amount of strong acid(s) employed should be such that in accordance with the objectives of this invention, a sharp, strong or objectionable acid taste is not imparted to the foodstuff. If hydrochloric acid is used as the strong acid, all of it should be converted so that no such acid would remain, only some derived salt. This invention does not preclude the addition of other ingredients with the acidulant to the foodstuff/acid combination. For example, small amounts of other acids, for example citric may be added with GDL to the combination, usually in the brine for example to overcome the buffering action (resistance to a change in pH of certain vegetables, such as asparagus), the amount preferably being minor and below that which would deleteriously affect or mask the taste of the foodstuff. Also salt, sugar, and/or other ingredients may be added to the brine solution or added separately for example for flavor, according to conventional practices.

The plastic containers are filled with the foodstuff/acid/lactone combination and the containers are hermetically sealed, for example by a conventional double seam, typically either under a vacuum or in an atmosphere of steam by hot filling or by passing steam at the container top while sealing. The sealed container is then thermally processed at a temperature of 190°F (88°C) or higher (usually less than about 240°F - 116°C) depending upon the factors previously mentioned, to sterilize the container and contents. Thereafter, the container and contents are cooled to ambient temperature, stored and shipped for distribution.

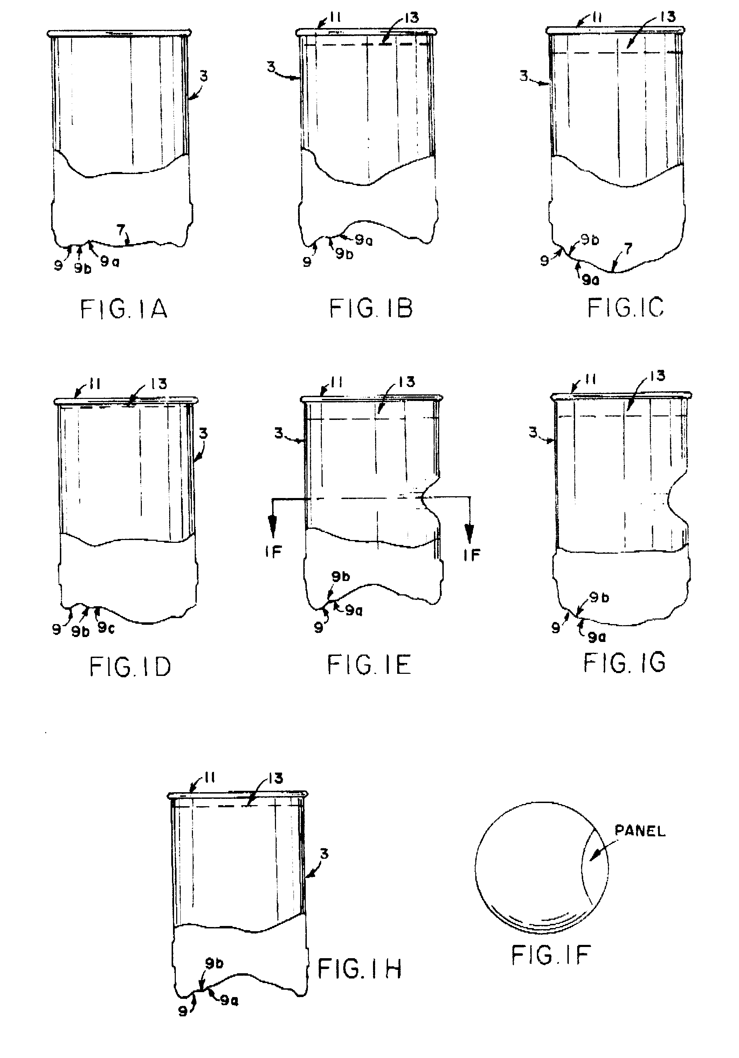

The methods of this invention can be more fully understood by reference to the Drawings and Examples. Reference is now made to Figures 1 through 1H in relation to understanding plastic distortion problems associated with thermal processing plastic containers.

There is shown in Figure 1A an open ended plastic container 1 having sidewalls 3 and a bottom wall 5 which includes a substantially flat portion 7 and outer and inner convex annular rings 9 and 9a with an interstitial ring 9b.

After the container is filled, it is sealed with a top closure 11 as shown in Figure 1B, leaving at the container top, a headspace of gases generally designated 13. The containers shown in the drawings are not to be taken as limiting of the scope of the invention, since the containers can be rigid or flexible. Likewise, the top closure shown is not to be limiting in that it can be rigid or flexible and it can be made of any suitable material, for example, metal, plastic or a combination thereof.

Figure 1C shows container 1 during thermal processing, or after thermal processing but before bottom reforming. As shown in this Figure, the container bottom is outwardly distended because the pressure within the container exceeds the external pressure. If no proper prior measures are taken, after the container is cooled, the bottom wall may remain deformed as shown in Figure 1D. Such a container configuration is unstable or undesirable due to rocker bottom. As will hereinafter be explained, rocker bottoms (Figure 1D) and sidewall panelling as shown in Figures 1E and 1F, or both (Figure 1G), may be minimized or prevented by utilizing the method of this invention wherein lower commercial sterilization processing temperatures and/or times may be employed.

For a full discussion of thermal processing food containers at elevated temperatures, the problems involved and solutions to the problems, see U. S. Application Serial No. 6/627,703 filed on July 3, 1984 assigned to ourselves.

Figure 1H represents a desired acceptable container configuration after thermal processing and reforming of the container because it has no rocker bottom or sidewall panelling. This container configuration is the same or nearly the same as the configuration shown in Figure 1B.

The present invention and its advantages will now be explained with reference to the following Examples and associated illustrative Figures. For Example 1, the foodstuff was contained in 211 x 215 (2-11/16" in diameter, by 2-15/16" high) multilayer injection blow molded rigid plastic containers constructed of the following five layers: an outer layer of a 40/60 blend of high density polyethylene and polypropylene, an adhesive layer of a blend of graft copolymers of maleic anhydride and propylene wherein the maleic anhydride moieties are grafted onto the respective polypropylene chains (the blend being comprised of 50% Admer QF 500, 25% QF 550 and 25% of other ingredients including 16% disodium phosphate; the Admers are sold by Mitsui Petrochemical Industries, Ltd.) an oxygen barrier layer of ethylene-vinyl alcohol copolymer (EVOH) (sold under the trade designation EVAL-EPF by Kuraray Co., Ltd.), another adhesive layer of the previously mentioned material, and an inner structural layer of the blend of high density polyethylene and polypropylene. The average thickness of the container side wall was .031 (0.79 mm) inch and of the bottom wall was .011 (0.28mm) inch (bottom wall measurements were taken at about the tip of the arrow of lead line for Number 9 in Figure 1E). It is to be understood, however, that the nature of the different layers or whether the plastic container has only one layer or another number of layers, or is of different wall thicknesses, is not per se critical, since the advantages of the lower thermal processing parameters of this invention for the plastic container can be realized for any single plastic container made of another number of layers, another or other plastic material(s), and of different wall thicknesses.

Example 1

Freshly harvested yellow squash, a low-acid foodstuff, was conventionally washed, sliced (each slice approximately 1/2" (1.2 cm) thick), and blanched for five minutes in water at about 200°F (93°C) (a conventional treatment primarily to stop enzyme action), the blanch being terminated by a cold water rinse. The blanched, sliced yellow squash was filled into a series of the 211 x 215 (6.8x7.4 cm) multi-layer rigid plastic containers to a fill-weight of 5 ounces (142 g). Some of the cans were filled with a brine which was an aqueous solution formed by adding 25.5 grams of GDL and 35 grams of salt in 3 liters of water heated to 180°F (82°C). The initial fill temperature of the container contents was about 110°F (43°C) and the contents had an equilibrium pH of less than 4.6, namely 4.2. Employing a heated brine helps to rapidly hydrolyze the GDL, which is a benefit. As previously mentioned, when GDL is hydrolyzed, it forms an equilibrium mixture of gluconic acid, glucono-delta lactone and glucono-gamma lactone. Although it is not necessary to heat the brine, heating it is preferred. The cans were hermetically sealed leaving a headspace of 3/16 inch, and thermally processed in accordance with this invention to achieve commercial sterility in a still retort at 220°F (104°C) for 15 minutes to reach a can center temperature (CCT) of 205°F (96°C). At the end of the 15 minute cook, when a CCT 205°F (96°C) had been reached, steam flow into the still retort was terminated. The steam was then vented to the atmosphere, and, via a bottom fill, cooling water at about 70°F (21°C) was introduced into the retort to cool the containers for about 5 minutes to about 100°F (38°C). The water was drained and the containers were removed from the retort. Some of the containers were opened within 24 hours whereupon the equilibrium pH was determined. The resulting thermally processed yellow squash had a firm texture, a bright yellow color, a near fresh home-cooked flavor, and the brine clarity (drained) was clear.

The plastic containers containing the yellow squash thermally processed in Example 1, as would be expected, softened and distended some during the retort thermal processing, however, at 220°F (104°C) the distention was minimal and significantly less than would have occurred at temperatures of 240°F (116°C) or higher. Since at 220°F (104°C), the CCT of 205°F (96°C) was reached, overpressure cooling was not needed. During cooling, all containers reformed to a commercially acceptable configuration.

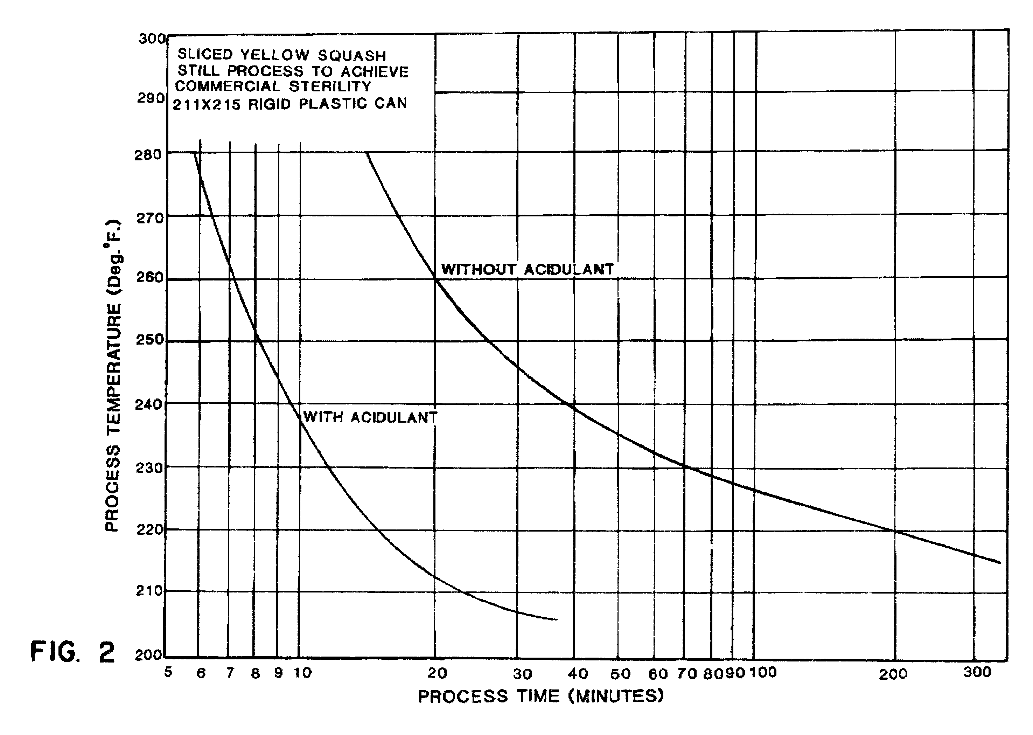

Briefly, Figure 2 shows that when the yellow squash is acidulated to reduce its equilibrium pH to 4.6 or below, the thermal processing time-temperatures which can be employed to achieve commercial sterility of the foodstuff are greatly reduced.

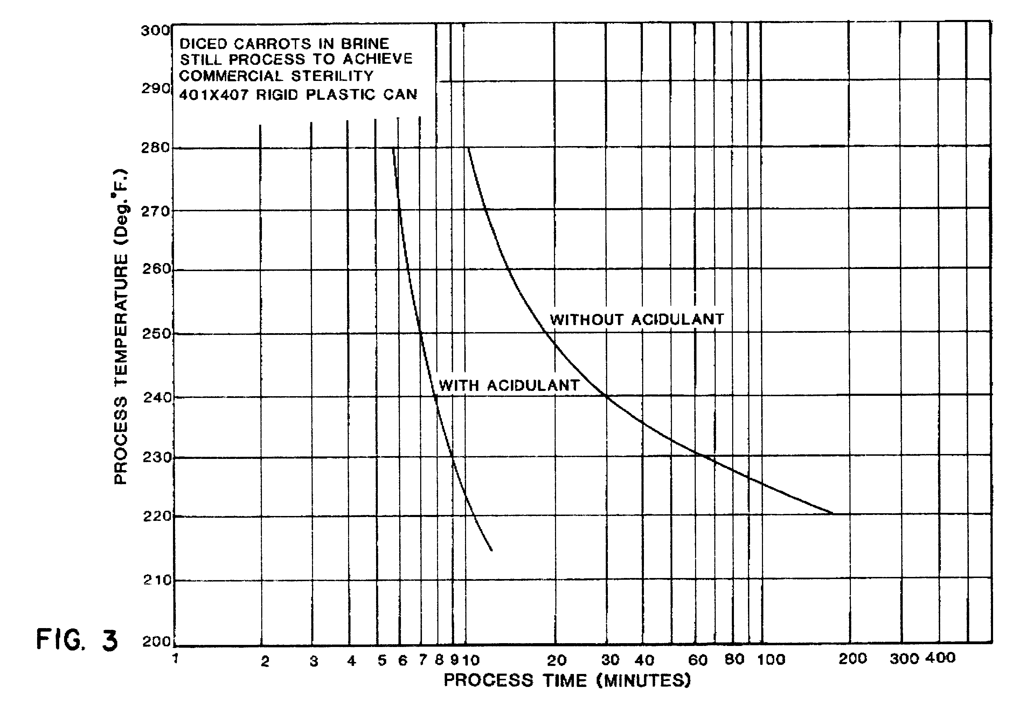

Before referring in more detail to Figure 2 and to Figures 3-7, some general observations should be made about the Figures. In each one (Figures 2-7), speaking in general each curve (to the right) shows a parameter curve which gives an indication of the various time-temperature combinations which will achieve commercial sterility of the particular foodstuff mentioned when thermally processed without an acidulant in a multi-layer plastic container of the size specified. These curves are based upon heat penetration characteristics data derived from a heat penetration test with the particular product and container size, and a certain time-temperature data point along each right hand curve corresponds to time-temperature thermal processing conditions actually used by the assignee of this invention in reaching commercially sterility with the specified foodstuff without GDL in the specified container size and retort. Each parameter curve to the left gives an indication of the various time-temperature combinations calculated to achieve commercial sterility of the particular foodstuff mentioned when thermally processed with on acidulant in the same multi-layer plastic container. The left curves are based upon the same heat penetration characteristics data as used for its associated right hand curve but with the additional critical factor that foodstuff contents are acidified with an acidulant to have an equilibrium pH of 4.6 or below when thermally processed. The left hand curves are calculated to achieve a can center temperature (CCT) of 205°F (96°C), which is sufficient for achieving commercial sterility of all acidified foods.

It is to be noted that Figures 2-7 are logarithmic and merely illustrative of the dramatic movement of the parameter to the left under this invention, and, therefore those skilled in the art will understand that the parameters illustrated are not precisely interpretable and are not to be used for selection of a particular actual thermal process time and temperature.

Referring now to Figures 2-7 in greater detail, Figure 2 shows the shift to the left of a still retort thermal processing parameter curve to achieve commercial sterility of yellow squash, the shift being from the right curve figured at an $F_o$ of 3.7 without an acidulant having been added, to the left curve calculated to achieve a can center temperature (CCT) of 205°F (96°C) which is also sufficient to achieve commercial sterilization of the product, and which for this product would be equivalent to a calculated $F_o$ of .01.

Example 1 and Figure 2 demonstrate that the addition of an acidulant, here GDL, to a yellow squash foodstuff to be canned permits a significant reduction in the severity of the thermal process to achieve commercial sterility of the contents, in that the thermal processing temperature, as well as the time, are significantly reduced with respect the heat-sensitive plastic material of which the container is made. The scope of the change can be appreciated by reference to Figure 2. In achieving the same the state of sterilization, for the same product in the same container with the same retort, whereas the right curve shows that without practicing this invention, the thermal process to which the plastic would be subjected typically would be about 240°F (116°C) for about 36 to 40 minutes, the left curve shows that under this invention the plastic need only see 220° (104°C) for about 15 minutes. It is to be noted that the chart clearly shows that for time through-put, energy and economic reasons, as well as the increased likelihood of overcooking the product, it would be commercially impractical to process yellow squash in a plastic container at 220°F (104°C) without an acidulant, for at that temperature it would take as long as 200 minutes to thermally process the same yellow squash.

The temperature/time parameters of each curve to the right in the Figures are based upon a particular sterilizing value ($F_o$) for the particular product which value here is basically a time equivalent calculated at 250°F (121°C). Particular $F_o$ values required to achieve commercially acceptable shelf-stable sterility are highly variable depending upon type and size of the container, type and size of food product, acidity of the product and the like. Reference is directed to the publication "Calculation of Processes for Canned Foods", Copyright 1967, American Can Company, which is an American Can Company Technical Services Publication, for further information on this matter, and how $F_o$ values are derived by those skilled in the art. The higher the $F_o$ value, the greater the severity of the thermal process. Generally speaking, the lower the pH, the less severe the heat treatment required for thermal sterilization.

Those skilled in the art of thermally processing foodstuffs whose heating characteristics have been established, can determine by known calculations (available in the aforementioned Publication), a sterilizing value (here, for example, CCT) which will achieve commercial sterility for the acidulated product in question and the type of retort or process to be employed. For products which heretofore never have been commercially sterilized and canned or for which no heating characteristics have been developed, it is recommended that an established thermal processing authority such as the assignee of this invention be consulted to obtain a sterilizing value (here again, for example, CCT) which will achieve commercial sterility for the equilibrium pH of the particular acidulated product contents to be processed. For all products whose equilibrium pH have been lowered to 4.6 or below, a CCT of 205°F (96°C) can be employed for commercial sterility. Should it be desired to use a CCT of less than 205°F (96°C), an aforementioned authority should be consulted to determine whether the lower CCT temperature would be sufficient to obtain commercial sterility.

The can or container center temperature (CCT) is determined by implanting a thermocouple into the container prior to its being hermetically sealed and tested. CCT herein means the temperature at the slowest heating point of the food product in the container which, depending on the food product, may be but not necessarily is the actual center point of the container.

Figure 3 shows the shift to the left of a still retort processing parameter curve to achieve commercial sterility of diced carrots in 401 x 407 (10.4 x 11.3 cm) thermoformed multi-layer rigid plastic containers, the shift being from the right curve wherein carrots were thermally processed at an $F_o$ of 3.5 without an acidulant, to the left curve which is based on an initial fill temperature of 100°F (38°C), is calculated to achieve a CCT of 205°F (96°C), and which, for this product, would be equivalent to an $F_o$ of .01. This curve indicates that whereas thermal processing of diced carrots would usually be conducted at say 240°F (116°C) for about 30 minutes, using an acidulant combined with the food in accordance with this invention, the plastic containers need only be subjected to 220°F (104°C) for 12 minutes. It is to be noted that carrots are exemplary of a low acid foodstuff which is heat sensitive, and, due to higher thermal processing temperatures, e.g. 240°F (116°C) for 30 minutes, the sterilized carrots suffer some degradation in organoleptic quality in that they exhibit a slightly darkened orange color, a slightly carmelized (burnt) flavor, and a slightly flaccid texture. By contrast, and in line with a specific objective of this invention, carrots processed with an acidulant at the lower temperature of 220°F (104°C) for about 12 minutes exhibit a bright orange color, a more fresh-like flavor and a firm texture, and the overall organoleptic effect is improved despite the possibility of a slightly acidic flavor.

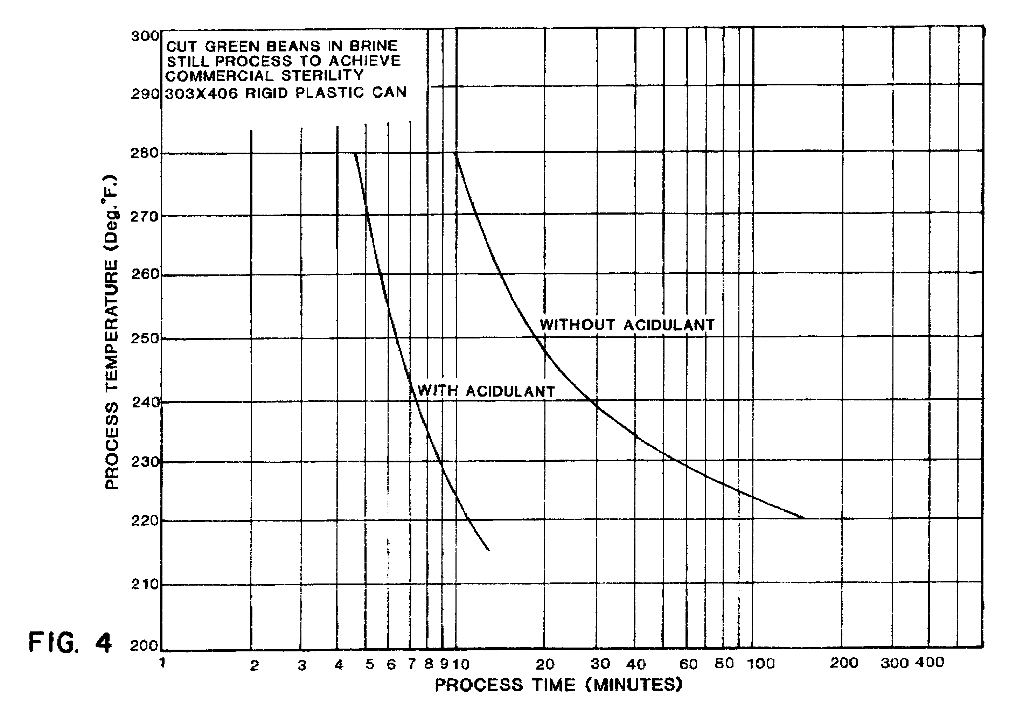

Figure 4 shows the shift to the left of a still retort processing parameter curve for achieving commercial sterility of green beans in 303 x 406 multi-layer rigid plastic containers, the shift being from the right curve with respect to which the green beans were thermally processed at an $F_o$ of 2.8 without an acidulant, to the left curve which is based on an initial fill temperature of 100°F (38°C), is calculated to achieve a CCT of 205°F (96°C), and which for this product would be equivalent to an $F_o$ of .01. Since commercial canning of green beans in metal cans often occurs at temperatures of 255°F (124°C), reference to the right curve of Figure 4 indicates that at that temperature a process of approximately 17 minutes in 303 x 406 (8.1 x 11.1 cm) plastic containers would be needed to reach commercial sterility in a still retort. At a retort temperature of 255°F (124°C), container walls of polyolefin based materials such as polyethylene and other structural materials previously described will soften to the point where distortion or crushing can often occur, especially in the bottom layers of the retort. These problems could be reduced by selecting a process along the right hand curve with a lower temperature parameter, say at 240°F (116°C) for 27 minutes. However, at this temperature, a retort overpressure during cooling would probably still be needed and the headspace and other container and process variables must be carefully controlled to avoid occasional distortion problems. Also, the longer cook, 27 minutes versus 17 minutes would reduce product throughput in the retort.

A better solution to the elimination of plastic container distortion in this example would be to utilize an acidulant such as GDL according to the present invention, thus allowing the achievement of commercial sterility along the left curve in Figure 4. This would allow use of significantly lower retort temperatures and times such as, say, 220°F (104°C) for 12 minutes. This parameter significantly reduces plastic distortion, increases retort throughput (12 minutes vs. 17 or 27 minutes) and produces canned beans with firmer texture and less of an overcooked or caramelized flavor, as well as better retention of heat-sensitive nutrients.

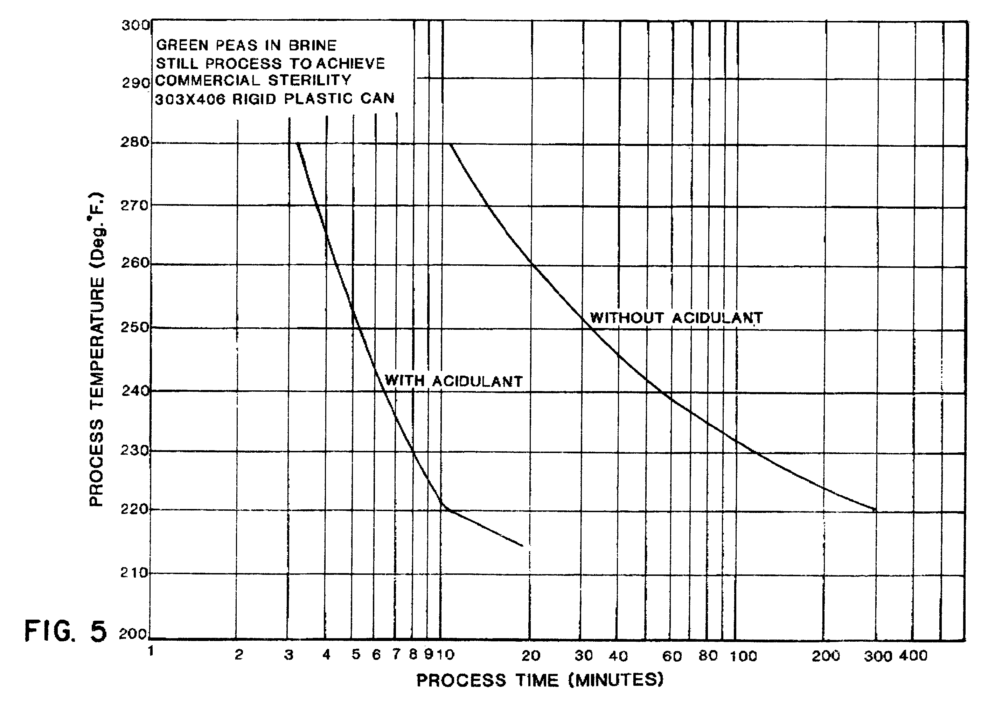

Figure 5 shows the shift to the left which can be obtained in accordance with this invention of a still retort processing parameter curve for thermally sterilizing green peas in 303 x 406 (8.1 x 11.1 cm) multi-layer rigid plastic containers, the shift being from the right curve wherein the thermal processing was effected at an $F_o$ of 6.0 without an acidulant, to the left curve which is based on an initial fill temperature of 100°F (38°C), and is calculated to achieve a CCT of 205°F (96°C) which for this product, would be equivalent to an $F_o$ of .01. A comparison of the curves shows that whereas plastic containers packed with green peas would be thermally processed say at about 240°F (116°C) for about 53 minutes, an equivalent commercial sterility could be achieved with an acidulant in a plastic container which, according to this invention, would only be subjected to 220°F (104°C) for about 11 minutes.

As examples using a different retort, two packs were made with green peas in 303 x 406 (8.1 x 11.1 cm) multi-layer rigid plastic cans which were thermally processed in a Steritort, which rotates the cans during cooking. For the first pack, a 260°F (127°C), 15 minute cook was used. The packed cans had an acceptable configuration (including good double seam integrity). The second pack, cooked at 265°F (129°C) for 13 minutes to obtain faster throughput, was a failure because the double seams unrolled and destroyed the packages' integrity. The curves and the above packs show that a better solution to the need for higher throughput would be to acidulate the green peas and process them at a temperature of 220°F (104°C).

## Example 2

Freshly harvested corn was conventionally washed and overblanched. 63 cc's of cold salt-containing brine was filled into each of a series of 303 x 406 (8.1 x 11.1 cm) thermoformed, multi-layer rigid plastic containers. 10.5 ounces (297 g) of the blanched corn was added to each of a series of the containers. Then, 5 weight ounces of (147 g) 190°F (88°C) water was added to top the cans off leaving a headspace of 3/16 of an inch (5 mm). The containers were steam flow hermetically sealed and thermally processed in an agitated retort (steritort) at a 6.3 RPM reel speed to achieve commercial sterility at 255°F (124°C) for 20 minutes. The resulting thermally processed corn was of good quality.

Although an overpressure of 10 psi (0.69 bar) was employed during cooling, due to poor material distribution in the container wall, a fair number of the thermally processed plastic containers were panelled and therefore did not have a commercially acceptable configuration.

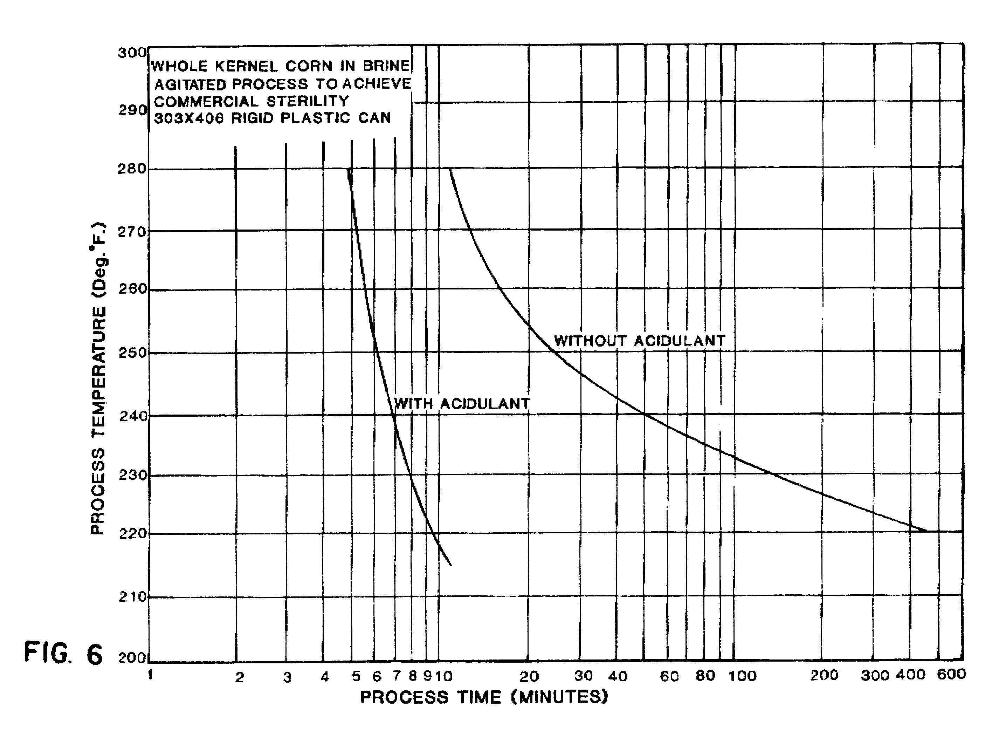

Figure 6 shows the shift to the left of an agitated retort processing parameter curve for commercially sterilizing corn, the shift being from the right curve with respect to which one data point represents wherein the corn was actually thermally processed in Example 2 at an $F_o$ of at least 10. without an acidulant to the left curve which is based on an initial fill temperature of 100°F (38°C) and calculated to achieve a can center temperature of 205°F (96°C), which for this product would be equivalent to an $F_o$ of .01. Again, whereas the plastic containers conventionally thermally processed in accordance with Example 2 were subjected to temperatures of about 255°F (124°C) for about 20 minutes, an equivalent thermal sterilization of the product could be achieved in accordance with this invention by subjecting the containers to about 230°F (110°C) for about 8 minutes, or to about 220°F (104°C) for about 10 minutes.

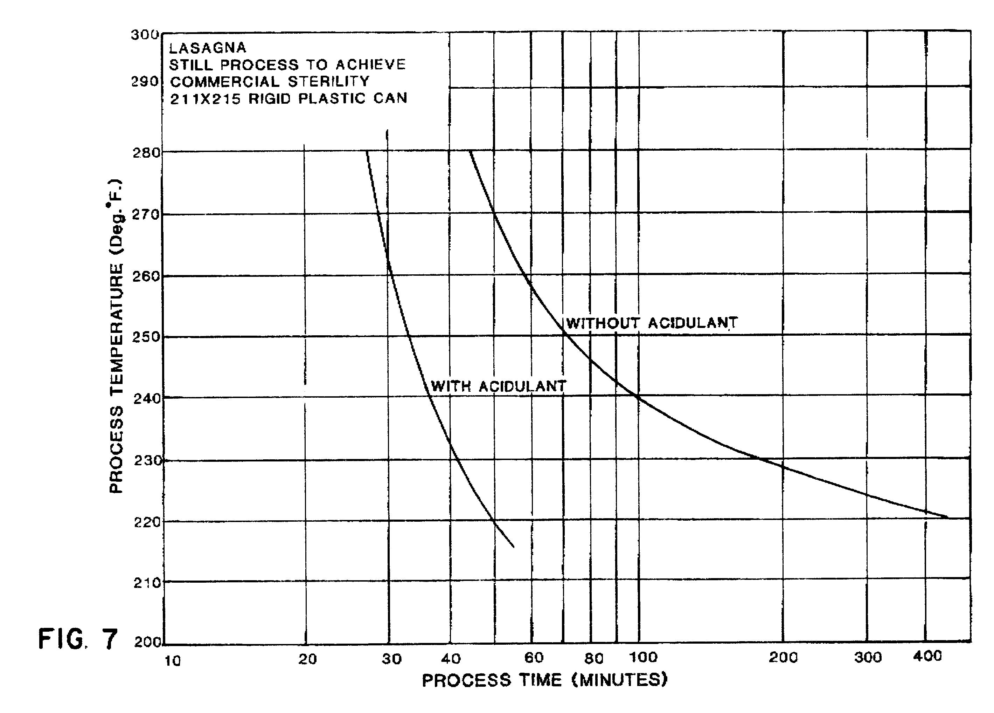

Figure 7 shows the shift to the left which can be effected in accordance with this invention of a still retort processing parameter curve for commercially sterilizing lasagna, the shift being from the right curve wherein the lasagna thermally processed at an $F_o$ of 8.3 without an acidulant, to the left curve which is based on initial fill temperature 100°F (38°C), and is calculated to achieve a CCT of 205°F (96°C), which for this product would be equivalent to an $F_o$ of .03. The Figure shows that whereas the plastic container in which the lasagna would be commercially sterilized say at 240°F (116°C) for about 100 minutes, an equivalent sterilization can be obtained with an acidulant in a plastic container which in accordance with this invention would only be subjected to 220°F (104°C) for about 48 minutes.

Example 3

Canned lasagna is currently often thermally processed commercially in metal containers in still retorts at 240°F (116°C). The packer wants to process it at 250°F (121°C) to achieve a higher throughput.

With respect to plastic containers, test packs of lasagna were prepared in the plastic cans of Example 1 (i.e. 211 x 215) (6.8 x 7.4 cm) and processed in a still retort both at 240°F (116°C) and at 245°F (118°C), using a 10 psi (0.69 bar) air overpressure during the cooling stage. The cans were stacked 13 layers high. The lower cans easily support this load at room temperature. With respect to the cans of a crate which were processed in the retort at 245°F (118°C), for 80 minutes, the cans of the bottom 3 layers exhibited crushing (of the bearing ring, just outward from the tip of the arrow of the lead line for No. 9 at the resting point of the container in Figure 1A).

As for the cans of a crate which were processed at 240°F (116°C) for 100 minutes, crushing was confined to the bottommost layer of the stack. Even though this is a longer cycle time, better can quality would necessitate using a 240°F (116°C) cook for non-acidulated lasagna when using this type of retort. It can be seen from the right cure of Figure 7, the packer's objective of processing at 250°F (121°C) to obtain a high throughput still requires a cook time of about 70 minutes and therefore the objective cannot be reached with these particular cans and this load in this type of retort. However, the left curve of Figure 7 shows that with acidulated lasagna, the objective can be met in that the process time can be reduced to about 48 minutes using a 220°F (104°C) cook. Under these conditions, it can be seen that since the lower cans had significantly better crush resistance at 240°F (116°C) than at 245°F (118°C), it is evident that at 220°F (104°C) the lower cans will not crush and a fast cycle time can be achieved.

The multi-layer rigid plastic containers used as a basis for calculating the curves of Figures 2-7 were five layer constructions whose layers were similar to those of the containers of Example 1 in that the outer and inner layers were blends of high density polyethylene and polypropylene, the barrier was an EVOE material and the adhesive was not a blend of Admer materials but was a single adhesive material.

With respect to the cook cycle techniques which would be employed in accordance with this invention, from the start of the steam cook until the end of the cook when the steam is turned off, the thermal processing techniques (other than with respect to temperatures and times), which would be employed with respect to plastic containers, need not be but they can be basically the same as those which would be employed for thermally processing the respective foodstuffs in plastic or metal containers of the same size (with or without an acidulant). With respect to temperatures and times, under this invention, if the conventional elevated temperature is not problematical due to either or both the foodstuff or the plastic container, within limits required for achieving commercial sterility, the time can be shortened to thereby achieve consequent increased throughput and obvious economic and energy savings. If temperature is problematical to the product and/or to the plastic, the temperature can be lowered as desired within limits required for commercial sterility and within limits of the equipment, and with respect to certain products within the time limits needed to sufficiently cook the product, e.g. for firm products to obtain adequately softened texture. Heretofore, for achieving commercial sterility of low acid foods in plastic containers, the desired thermal processing temperature range would have been from about 240°F (116°C) to about 265°F (129°C), preferably to about 255°F (124°C) just as with metal containers. For most such products, processing at below 240°F (116°C) would take too long to achieve commercial sterility. Increasingly, from about 255°F to 265°F (124-129°C) the structural material tends to become so softened that distortion becomes increasingly problematical both in terms of distortion and crush resistance (in a still retort) and reformation becomes more difficult. In one test done with green peas in an agitated cook (Steritort) (at an 8 RPM reel speed) at 265°F (129°C) for 13 minutes all the double seams of the (303 x 406) (8.1 x 1.1 cm) multi-layer rigid plastic containers unfolded. At 260°F (127°C) for 15 minutes, with closely controlled overpressure cooling, 9 out of 125 containers panelled.

In accordance with this invention, plastic containers can be thermally processed to achieve commercial sterility of the packaged foodstuff at temperatures below 240°F (116°C), preferably from about 220°F to about 240°F (104 - 116°C). Of course, the temperature/time employed will depend upon many factors as previously mentioned. Other things being equal, the time required for thermal processing plastic containers is longer than for metal containers because plastic does not conduct heat as well as metal. At the end of the thermal sterilization cycle, as in the case with plastic containers processed without an acidulant, any plastic wall distortion must reform. Reformation is done while the plastic of the bottom wall is at a reformable temperature, and can be achieved by causing the pressure outside of the container to exceed the pressure inside of the container, either by utilizing an added external pressure or by reducing the pressure inside the container. In accordance with this invention, as demonstrated by Example 1 and as illustrated by the left hand curves in Figures 2-7, since a CCT of only 205°F (96°C) need be achieved for commercial sterilization of an acid or acidified foodstuff, and since foodstuffs develop high internal pressures at 212°F (100°C) or above, depending on the various factors involved, in many instances an overpressure cool may not need to be employed. For example, generally, there tends to be less need or desire for an overpressure cool for an agitated rotary cook than for a still cook. Less plastic container time in an agitation environment advantageously reduces chances of abrasion of the container wall surfaces. It has been found that as a general guideline for still cooking, depending of course on the factors involved, in many instances an overpressure cool may not be needed at temperatures below about 230°F (110°C), but, at temperatures above about 230°F (110°C), it may be desirable to use some overpressure.

Above about 230°F (110°C), about 10 psi (0.69 bar) overpressure (over the cook pressure inside the retort equipment) has been found satisfactory. For example, should an overpressure cool be desired for a still retort in a situation in which there has been a cook temperature of 240°F (116°C) with an internal retort pressure of 10.5, (0.72 bar) air or some inert gas is introduced into the retort before cooling. About 10 psi (0.69 bar) over above the internal retort pressure has been found satisfactory for acceptable bottom well reformation. After the bottom is reformed and the air pressure is removed by venting to atmospheric, the water cooling process can be employed according to conventional practices, it being appreciated of course that with the lower cook temperatures hereunder, less cooling time is needed.

From the above, it can be seen that, by reducing the thermal sterilization temperature, need for a pressure cool and for staying within on allowable pressure cool psi/time range may be eliminated while still obtaining acceptable reformation and good container aesthetics.

As previously stated, an advantage provided by this invention is that the lower processing temperature mean less criticality as to filling conditions in terms of controlling the headspace to within an acceptable range because of the affect of headspace on internal gas pressures imposed on the container wall during the thermal sterilization cycle. Although it is not to be taken as directly analogous to foodstuffs, the broadening of the useful headspace range as cook temperature decreases can be somewhat illustrated by the fact that in the case of water hermetically sealed in 211 x 215 (6.8 x 7.4 cm) multi-layer rigid plastic containers, at 265°F (129°C) the headspace must be kept between 8cc - 10cc. If less, there are rocker bottoms and if more, there is pannelling. At 260°F (127°C), the range is between 6cc - 10cc; at 255°F (124°C) it is between 4cc - 10cc; and at 240°F (116°C), it is between 2cc - 14cc. It might be expected that the useful headspace range would be broadened at lower temperatures for water or for food. It is to be noted that in Example 1 (squash, cooked at 220°F - 104°C), acceptable configurations were obtained with 20cc headspace.

## Claims

1.  A method of thermally processing a heat sensitive foodstuff in a self supporting plastic container subject to distortion when subjected to the thermal processing conditions necessary to achieve commercial sterilization of the foodstuff which comprises:

(a) filling the container with the foodstuff and a sufficient amount of an hydrolysis mixture of an aldonic acid and its lactones or a precursor thereof to lower the equilibrium pH to a value such that commercial sterilization can be effected at a time-temperature parameter which is below that at which the container will become distorted,

(b) hermetically sealing the container and commercially sterilizing the foodstuff in the container at said time-temperature parameter; said time-temperature parameter being lower than the higher time-temperature parameter needed to achieve commercial sterilization when said hydrolysis mixture of an aldonic acid and its lactones or a precursor thereof is not employed.

2. A method according to claim 1, wherein the foodstuff is an acid foodstuff, for example a low acid foodstuff.

3. A method according to claim 1, wherein the foodstuff is selected from lasagna, ravioli, spaghetti, chili, fish, meat, meat products, beans and corn.

4. A method according to claims 1, 2 or 3, wherein the plastic container is comprised of polyolefin.

5. A method according to claims 1, 2, 3 or 4, wherein the hydrolysis mixture comprises gluconic acid, glucono-delta lactone and glucono-gamma lactone.

6. A hermetically sealed container containing a heat sensitive foodstuff commercially sterilized according to the method of claim 1.

7. A hermetically sealed container according to claim 6, wherein the foodstuff is an acid foodstuff, for example a low acid foodstuff.

8. A hermetically sealed container according to claim 6, wherein the foodstuff is selected from lasagna, ravioli, spaghetti, chili, meat, meat products, beans and corn.

9. A hermetically sealed container according to any of claims 6, 7 or 8, wherein the plastic container is comprised of polyolefin.

10. A hermetically sealed container according to any of claims 6, 7, 8 or 9, wherein the hydrolysis mixture comprises gluconic acid, glucono-delta lactone and glucono-gamma lactone.

## Revendications

1. Procédé de traitement thermique d'un produit alimentaire sensible à la chaleur, dans un récipient de plastique autoporteur sujet à la déformation lorsqu'il est exposé aux conditions de traitement thermique nécessaires pour parvenir à une stérilisation commerciale, comprenant les opérations consistant

(a) à charger dans le récipient le produit alimentaire et une quantité suffisante d'un mélange d'hydrolyse d'un acide aldonique et de ses lactones ou d'un précurseur de celui-ci pour abaisser le pH à l'équilibre à une valeur telle que la stérilisation commerciale puisse être effectuée à un paramètre temps-température qui est inférieur à celui auquel le récipient serait déformé,

(b) à fermer hermétiquement le récipient et à soumettre à une stérilisation commerciale le produit alimentaire contenu dans le récipient audit paramètre temps-température, ledit paramètre temps-température étant inférieur au paramètre temps-température plus élevé qui est nécessaire pour parvenir à la stérilisation commerciale lorsque ledit mélange d'hydrolyse d'un acide aldonique et de ses lactones ou le précurseur de celui-ci n'est pas utilisé.

2. Procédé selon la revendication 1, dans lequel le produit alimentaire est un produit alimentaire acide, par exemple un produit alimentaire faiblement acide.

3. Procédé selon la revendication 1, dans lequel le produit alimentaire est choisi parmi des lasagnes, des raviolis, des spaghettis, du chili, du poisson, de la viande, des produite à base de viande, des haricots et du maïs.

4. Procédé selon l'une quelconque des revendications 1 à 3, dans lequel le récipient de plastique est fait d'une polyoléfine.

5. Procédé selon l'une quelconque des revendications 1 à 4, dans lequel le mélange d'hydrolyse comprend de l'acide gluconique, de la glucono-$\delta$-lactone et de la glucono-$\gamma$-lactone.

6. Récipient fermé hermétiquement, contenant un produit alimentaire sensible à la chaleur, stérilisé au degré commercial par le procédé selon la revendication 1.

7. Récipient fermé hermétiquement selon la revendication 6, dans lequel le produit alimentaire est un produit alimentaire acide, par exemple un produit alimentaire faiblement acide.

8. Récipient fermé hermétiquement selon la revendication 6, dans lequel le produit alimentaire est choisi parmi des lasagnes, des raviolis, des spaghettis, du chili, du poisson, de la viande, des produits à base de viande, des haricots et du maïs.

9. Récipient fermé hermétiquement selon l'une quelconque des revendication 6 à 8, dans lequel le récipient de plastique est fait d'une polyoléfine.

10. Récipient fermé hermétiquement selon l'une quelconque des revendication 6 à 9, dans lequel le mélange d'hydrolyse comprend de l'acide gluconique, de la glucono-δ-lactone et de la glucono-γ-lactone.

## Patentansprüche

1. Ein Verfahren zum thermischen Verarbeiten eines wärmeempfindlichen Lebensmittels in einem selbsttragenden Kunststoffbehälter, der sich verzieht, wenn er den thermischen Verarbeitungsbedingungen unterworfen wird, die zum Erzielen kommerzieller Sterilisation des Lebensmittels notwendig sind, das folgendes umfaßt:
   a) Füllen des Behälters mit dem Lebensmittel und einer ausreichenden Menge eines Hydrolysegemisches aus einer Aldonsäure und ihren Lactonen oder einem Vorläufer derselben, um den Gleichgewichts-pH auf einen Wert zu senken, so daß kommerzielle Sterilisation mit einem Zeit-Temperatur-Parameter durchgeführt werden kann, der unterhalb von demjenigen liegt, bei dem der Behälter verzogen werden würde,
   b) hermetisches Versiegeln des Behälters und kommerzielles Sterilisieren des Lebensmittels in dem Behälter bei dem besagten Zeit-Temperatur-Parameter; wobei der besagte Zeit-Temperatur-Parameter niedriger als der höhere Zeit-Temperatur-Parameter ist, der notwendig ist, um kommerzielle Sterilisation zu erzielen, wenn das besagte Hydrolysegemisch aus einer Aldonsäure und ihren Lactonen oder einem Vorläufer derselben nicht verwendet wird.

2. Ein Verfahren nach Anspruch 1, bei dem das Lebensmittel ein saures Lebensmittel, zum Beispiel ein Lebensmittel mit niedrigem Säuregehalt ist.

3. Verfahren nach Anspruch 1, bei dem das Lebensmittel aus Lasagna, Ravioli, Spaghetti, Gewürzpaprika, Fisch, Fleisch, Fleischprodukten, Bohnen und Mais ausgewählt ist.

4. Ein Verfahren nach den Ansprüchen 1, 2 oder 3, bei dem der Kunststoffbehälter aus Polyolefin besteht.

5. Ein Verfahren nach den Ansprüchen 1, 2, 3 oder 4, bei dem das Hydrolysegemisch Gluconsäure, Gluconsäure-delta-lacton und Gluconsäure-gamma-lacton umfaßt.

6. Ein hermetisch versiegelter Behälter, der ein wärmeempfindliches Lebensmittel enthält, das nach dem Verfahren von Anspruch 1 kommerziell sterilisiert ist.

7. Ein hermetisch versiegelter Behälter nach Anspruch 6, bei dem das Lebensmittel ein saures Lebensmittel, zum Beispiel ein Lebensmittel mit niedrigem Säuregehalt ist.

8. Ein hermetisch versiegelter Behälter nach Anspruch 6, bei dem das Lebensmittel aus Lasagna, Ravioli, Spaghetti, Gewürzpaprika, Fleisch, Fleischprodukten, Bohnen und Mais ausgewählt ist.

9. Ein hermetisch versiegelter Behälter nach einem der Ansprüche 6, 7 oder 8, bei dem der Kunststoffbehälter aus Polyolefin besteht.

10. Ein hermetisch versiegelter Behälter nach einem der Ansprüche 6, 7, 8 oder 9, bei dem das Hydrolysegemisch Gluconsäure, Gluconsäure-delta-lacton und Gluconsäure-gamma-lacton umfaßt.

FIG.1A

FIG.1B

FIG.1C

FIG.1D

FIG.1E

FIG.1G

FIG.1H

FIG.1F

FIG. 2

SLICED YELLOW SQUASH
STILL PROCESS TO ACHIEVE
COMMERCIAL STERILITY
211X215 RIGID PLASTIC CAN

WITHOUT ACIDULANT

WITH ACIDULANT

PROCESS TIME (MINUTES)

PROCESS TEMPERATURE (Deg.°F.)

18

FIG. 3

FIG. 4

FIG. 5

GREEN PEAS IN BRINE
STILL PROCESS TO ACHIEVE
COMMERCIAL STERILITY
303X406 RIGID PLASTIC CAN

WITHOUT ACIDULANT

WITH ACIDULANT

PROCESS TEMPERATURE (Deg. °F.)

PROCESS TIME (MINUTES)

EP 0 192 354 B1

FIG. 6

WHOLE KERNEL CORN IN BRINE
AGITATED PROCESS TO ACHIEVE
COMMERCIAL STERILITY
303X406 RIGID PLASTIC CAN

WITHOUT ACIDULANT

WITH ACIDULANT

PROCESS TEMPERATURE (Deg.°F.)

PROCESS TIME (MINUTES)

EP 0 192 354 B1

FIG. 7

LASAGNA
STILL PROCESS TO ACHIEVE
COMMERCIAL STERILITY
211X215 RIGID PLASTIC CAN

PROCESS TEMPERATURE (Deg.°F.)

WITHOUT ACIDULANT

WITH ACIDULANT

PROCESS TIME (MINUTES)

EP 0 192 354 B1